(19) Europäisches Patentamt
European Patent Office
Office européen des brevets

(11) Publication number: 0 353 031 B1

# (12) EUROPEAN PATENT SPECIFICATION

(45) Date of publication of patent specification: **22.03.95**

(51) Int. Cl.[6]: **C09B 5/14**, C08K 5/16

(21) Application number: **89307562.2**

(22) Date of filing: **25.07.89**

## (54) Anthrapyridone compounds and their production process.

(30) Priority: **29.07.88 JP 191918/88**

(43) Date of publication of application:
**31.01.90 Bulletin 90/05**

(45) Publication of the grant of the patent:
**22.03.95 Bulletin 95/12**

(84) Designated Contracting States:
**CH DE GB LI**

(56) References cited:
**US-A- 2 300 453**

**CHEMICAL ABSTRACTS, vol. 92, 1980, page 634, abstract no. 180967b, Columbus, Ohio, US; V.P. SHAPKIN et al.: "Synthesis of difficult to obtain anthrapyridones of 1,4-diaminoanthraquinone derivatives", && ZH. ORG. KHIM. 1980, 16(1), 230-1**

**CHEMICAL ABSTRACTS, vol. 97, 1982, page 82, abstract no. 164532d, Columbus, Ohio, US; & SU-A-927 836 (M.P. ZAVERTHNEVA et al.) 15-05-1982**

(73) Proprietor: **SUMITOMO CHEMICAL COMPANY, LIMITED**
**5-33 Kitahama 4-chome**
**Chuo-ku**
**Osaka-shi**
**Osaka (JP)**

Proprietor: **SUMIKA FINE CHEMICAL COMPANY, LTD.**
**1-21, Utajima-3-chome,**
**Nishiyodogawa-ku**
**Osaka (JP)**

(72) Inventor: **Nakamatsu, Toshio**
**2-1-323, Haradacho**
**Ibaraki-shi**
**Osaka 567 (JP)**
Inventor: **Terao, Masanobu**
**Imaike House 105**
**2-33, Sensou**
**Itami-shi**
**Hyogo 664 (JP)**
Inventor: **Muneishi, Shigetoshi**
**Seifuryo**
**3-14, Kitano**
**Itami-shi**
**Hyogo 664 (JP)**

EP 0 353 031 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Kometani, Norio**
**Seifuryo**
**14, Kitano 3-chome**
**Itami-shi**
**Hyogo 664 (JP)**
Inventor: **Hayashi, Yoshiaki**
**2-10-2-251, Sonehigashimachi**
**Toyonaka-shi**
**Osaka 560 (JP)**

(74) Representative: **Beresford, Keith Denis Lewis et al**
**BERESFORD & Co.**
**2-5 Warwick Court**
**High Holborn**
**London WC1R 5DJ (GB)**

## Description

The present invention relates to an anthrapyridone compound and a novel process for producing the same.

Anthrapyridone compounds have been used as coloring agents for synthetic resins and acid dyes and examples thereof are those which are represented by the following formulas (Japanese Patent Kokai No. 63-139170). These anthrapyridone compounds are excellent in heat resistance when used as a coloring agent for synthetic resins and further can dye wool in bright red color. However, they are produced from 4-bromo-1,9-N-methylanthrapyridone which is obtained through five steps starting from anthraquinones and thus are expensive and are limited in their use.

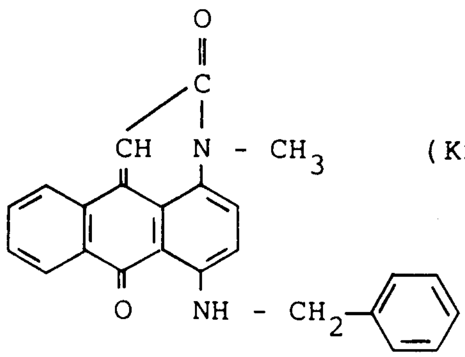

(Known compound A)

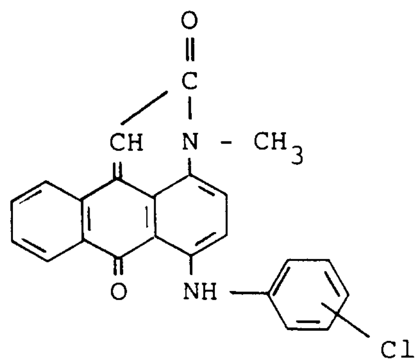

(Known compound B)

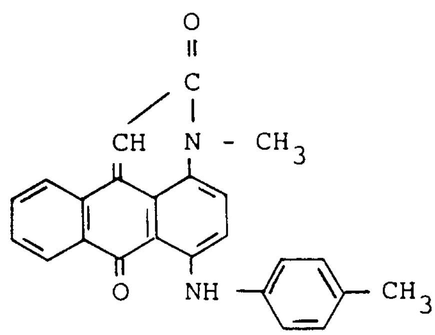

(Known compound C)

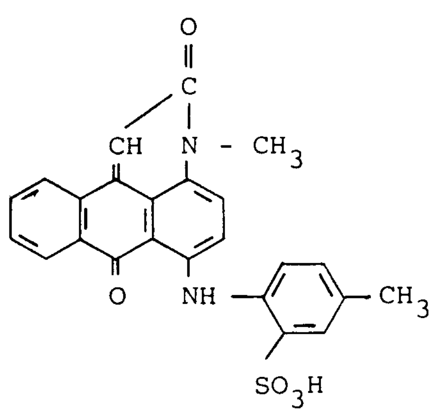

(Known compound D)

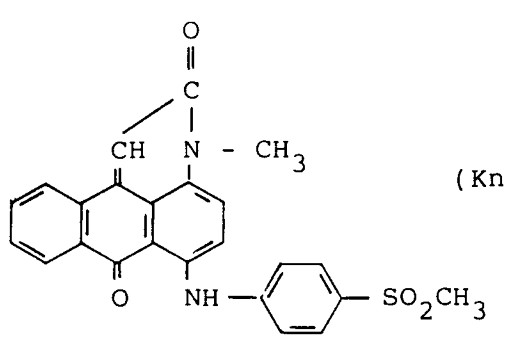

(Known compound E)

The inventors conducted intensive research in an attempt to obtain anthrapyridone compounds by industrially advantageous process without using expensive 4-bromo-1,9-N-methylanthrapyridone.

The present invention relates to a novel process for producing an anthrapyridone compound represented by the formula (1):

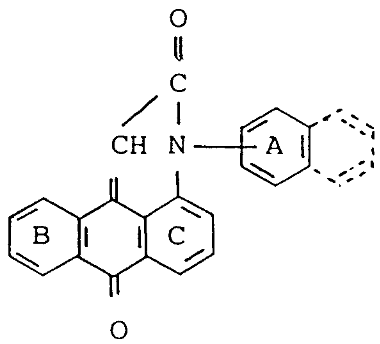

(1)

wherein A is a benzene ring or a naphthalene ring which may have a substituent and aromatic rings B and C may have a substituent, which comprises reacting an α-haloanthraquinone compound represented by the formula (2):

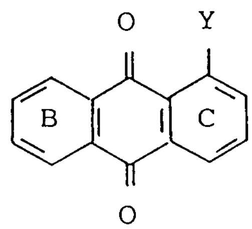

(2)

wherein Y represents a halogen atom and B and C are as defined above, with an amide compound represented by the formula (3):

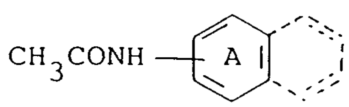

(3)

wherein A is as defined above, to obtain a compound represented by the formula (4):

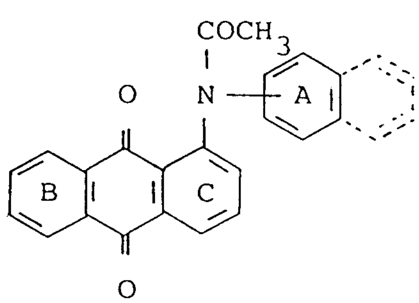

(4)

wherein A, B and C are as defined above and then subjecting this compound to ring closure reaction. Certain compounds of formula I have been synthesised by V P Shapskin et al., Zh, Org, Khim, 1980, 16 (1), 230-1, see Chem, Abs, 92:180967b.

The inventors have found that the anthrapyridone compounds represented by the formula (1) obtainable by the process of the present invention include compounds which have excellent heat resistance when used as coloring agents for synthetic resins.

The novel anthrapyridone compounds of the present invention are represented by the following formula (1):

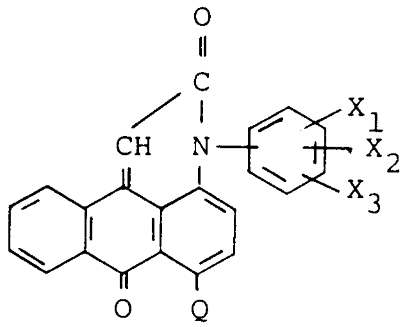

(I)

wherein Q is $-NH_2$, $-NHCH_3$ or -NHCOZ where Z is phenyl or alkyl which may be substituted; $X_1$, $X_2$ and $X_3$ are each hydrogen, halogen, alkyl, alkoxy, hydroxy, $-NHCOR^1$, $-CONR^2R^3$ $-COR^4$, $-COOR^5$ $-SO_2R^6$ or $-SO_2NR^7R^8$ where $R^1$ and $R^4$ are each $C_{1-4}$ alkyl, $R^2$ and $R^3$ are each hydrogen or $C_{1-4}$ alkyl, $R^5$ and $R^6$ are each alkyl or hydroxyalkyl and $R^7$ and $R^8$ are each hydrogen or $C_{1-4}$ alkyl, with proviso that when Q is $-NHCH_3$, $X_1$, $X_2$ and $X_3$ are each hydrogen, halogen, alkoxy, hydroxy, $-NHCOR^1$, $-CONR^2R^3$ $-COR^4$, $-COOR^5$ $-SO_2R^6$ or $-SO_2NR^7R^8$.

Among these anthrapyridone compounds, especially preferred are those represented by the following formula (II):

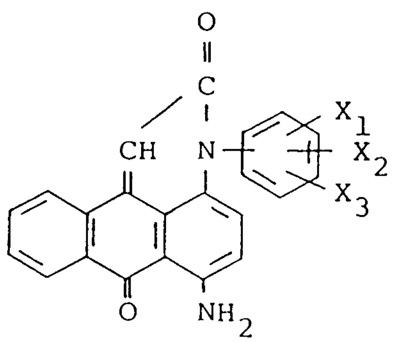

(II)

wherein $X_1$, $X_2$ and $X_3$ are as defined above.

It has been found that the anthrapyridone compounds represented by the formula (1) and obtainable by the process of the present invention are also useful as intermediates for various dyes and pigments or as disperse dyes for polyester fibers.

It has been further found that the anthrapyridone compounds represented by the formula (1) and obtainable by the process of the present invention can be used as useful acid dyes by introducing water-soluble groups such as sulfonic group or carboxylic group.

The substituents which benzene ring or naphthalene ring represented by A may have in the anthrapyridone compounds represented by the formula (1) include, for example, one or more of halogen, nitro, hydroxyl, and cyano and alkyl, alkoxyl, phenyl, phenoxy, amino, carboamido, alkylsulfone, and sulfonamido which may be further substituted, carboxylic acids and derivatives thereof and sulfonic acid and derivatives thereof. The number of substituent is 1 - 3.

Examples of substituents which the aromatic rings B anc C may additionally have are one or more of halogen, nitro, hydroxyl, cyano, sulfonic group and carboxylic group and alkyl, alkoxyl, phenyl, phenoxy and amino which may be further substituted. The number of these substituents is 1 - 6.

These substituents are not critical as far as they are inactive during preparation of the anthrapyridone compounds represented by the formula (1). These substituents include those which can be introduced after formation of matrix structure.

The anthrapyridone compounds represented by the formula (1) can be produced by the following process.

That is, an α-haloanthraquinone compound represented by the formula (2):

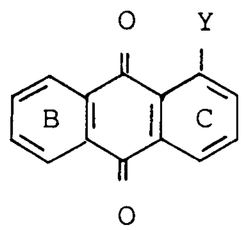

( 2 )

wherein Y is halogen and aromatic rings B anc C may further have substituents, is allowed to react with an amide compound represented by the formula (3):

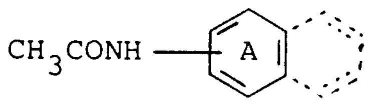

( 3 )

wherein A is benzene ring or naphthalene ring which may further have substituents, to obtain a compound represented by the formula (4):

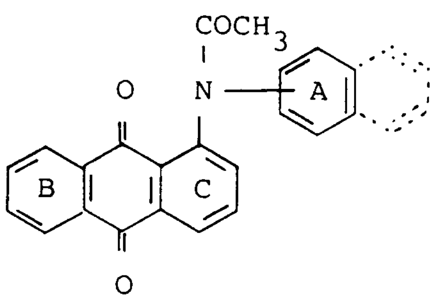

( 4 )

wherein A, B and C are as defined above, and then the resulting compound is subjected to ring closure reaction.

The condensation reaction of α-haloanthraquinone compound (2) and amide compound (3) is generally called Ullmann reaction and is usually carried out in the presence of water or an organic solvent at a reaction temperature of at least 30 °C, preferably 50 - 300 °C, more preferably 100 - 200 °C, preferably in the presence of metallic copper or copper compound.

The metallic copper and copper compounds used in the above condensation reaction include, for example, copper halides such as cuprous chloride and cupric chloride, copper oxide, copper sulfate and copper acetate. These may be used alone or in combination.

The organic solvents used in the condensation reaction include, for example, halobenzenes such as monochlorobenzene and o-dichlorobenzene, alkyl benzenes such as toluene and xylene, and polar solvents such as dimethylformamide, sulfolane and dimethyl sulfoxide. These may be used alone or in combination.

The condensation reaction can be favorably performed by using an acid-binding agent.

The acid-binding agent includes alkali metal carbonates such as potassium carbonate, sodium carbonate, potassium hydrogencarbonate, and sodium hydrogencarbonate and organic acid salts such as sodium acetate.

As α-haloanthraquinone compounds (2) used as starting materials for obtaining the anthrapyridone compounds represented by the formula (1), mention may be made of, for example, the following compounds.

1-Chloroanthraquinone,
1-Bromoanthraquinone,
1,5-Dichloroanthraquinone,
1,8-Dichloroanthraquinone,
1,4,5,8-Tetrachloroanthraquinone,

1-Bromo-2-aminoanthraquinone,
1-Bromo-4-aminoanthraquinone,
1-Bromo-4-benzoylaminoanthraquinone
1-Chloro-5-benzoylaminoanthraquinone,
1-Bromo-4-acetylaminoanthraquinone,
1-Bromo-4-propionylaminoanthraquinone,
1-Amino-2,4-dibromoanthraquinone,
1-Amino-2,4-dichloroanthraquinone,
Sodium 1-amino-4-bromoanthraquinone-2-sulfonate,
1,5-Diamino-2,4,6,8-tetrabromoanthraquinone,
1,8-Diamino-2,4,5,7-tetrabromoanthraquinone,
1,5-Dichloro-4,8-dinitroanthraquinone,
1,8-Dichloro-4,5-dinitroanthraquinone,
1,8-Dichloro-4-nitroanthraquinone,
1,5-Dichloro-4-nitroanthraquinone,
1-Chloro-5 or 8-nitroanthraquinone,
1-Amino-5-chloroanthraquinone,
1-Chloro-5-amino-8-hydroxyanthraquinone,
1-Chloro-5-benzoylamino-8-hydroxyanthraquinone,
1-Bromo-4-methylaminoanthraquinone,
1-Bromo-4-ethylaminoanthraquinone,
1-Bromo-4-butylaminoanthraquinone,
1-Anilino-4-bromoanthraquinone,
1-Amino-4-bromoanthraquinone-2-carboxylic acid,
1-Bromo-4-hydroxyanthraquinone,
N-acetyl-1-methylamino-4-bromoanthraquinone,
N-benzoyl-1-methylamino-4-bromoanthraquinone.

As amide compound (3) which is another starting material, mention may be made of, for example, the following compounds.

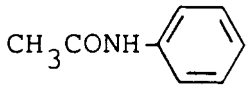 , 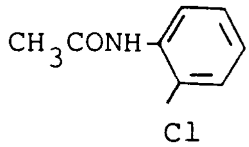 , 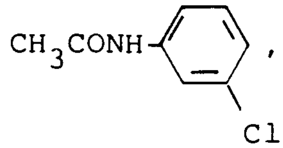 ,

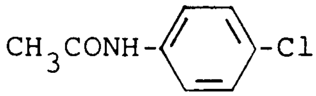 , 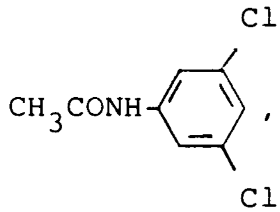 , 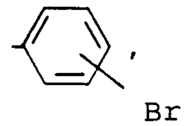 ,

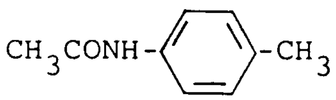 , 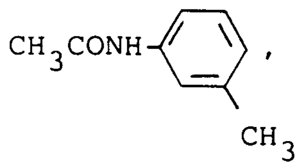 ,

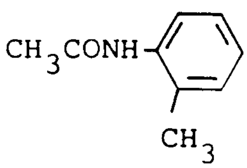 , 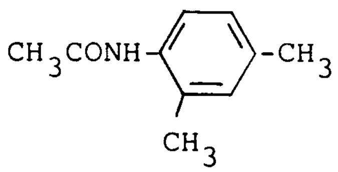 ,

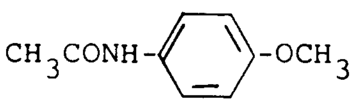 , 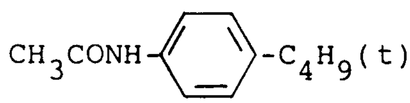 ,

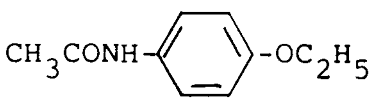 , 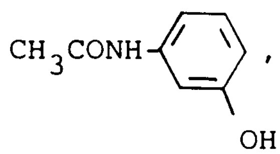 ,

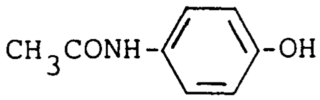, 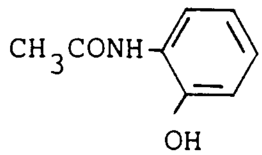,

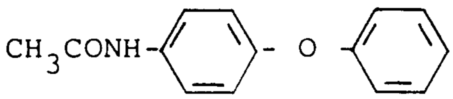, 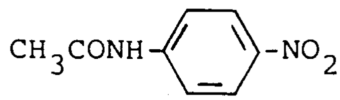,

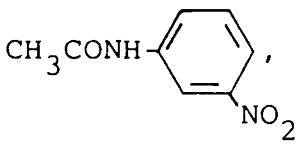, 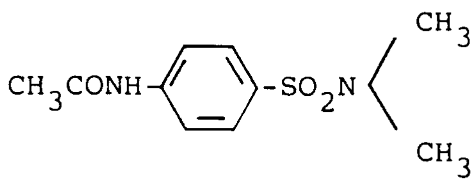,

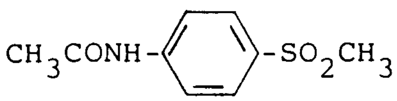, 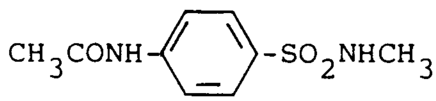,

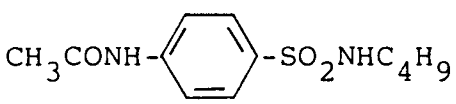,

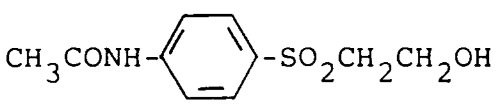,

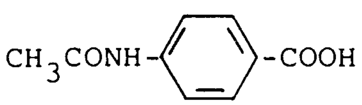, 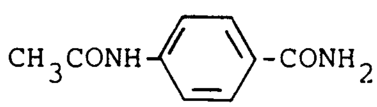,

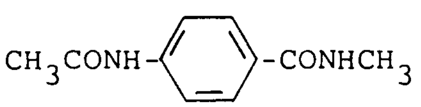,

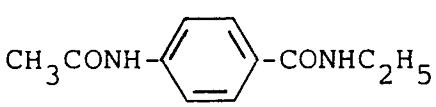, 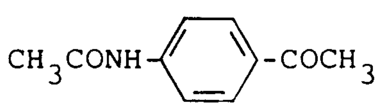,

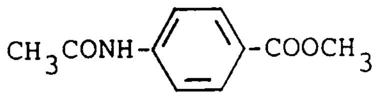,

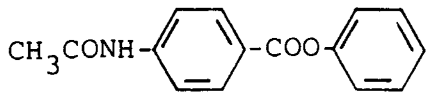, 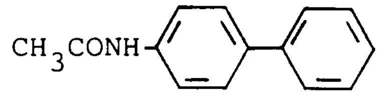,

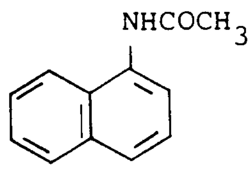 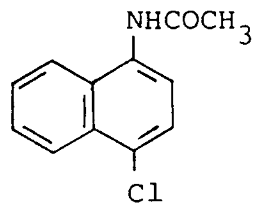

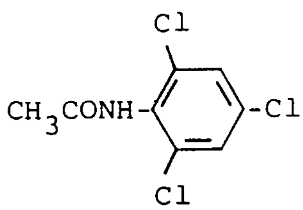, 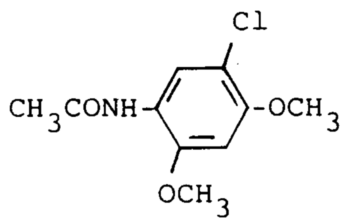,

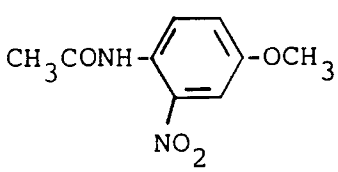, 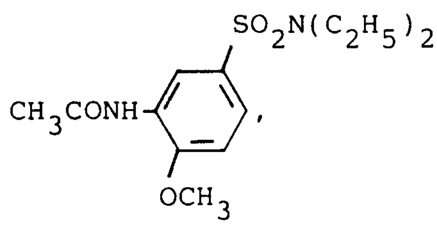,

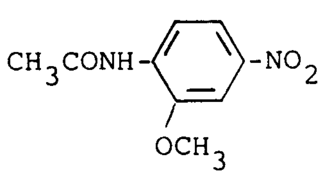, 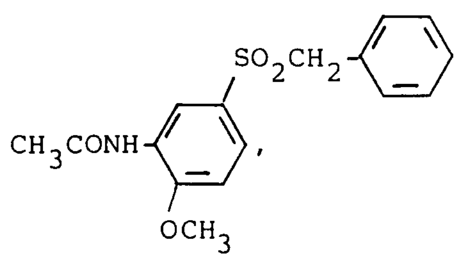,

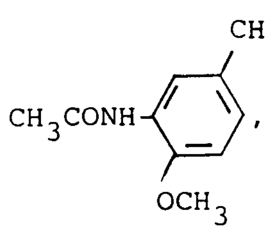, 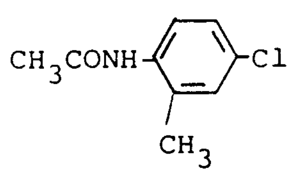,

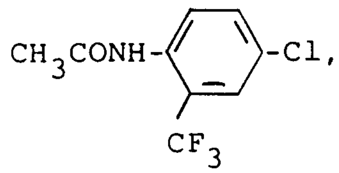

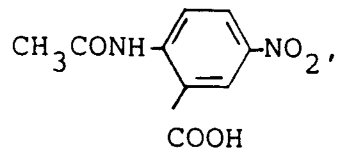

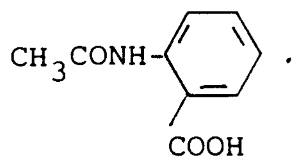

The ring closure reaction of the compound represented by the formula (4) obtained by the above process is carried out in water or an organic solvent, preferably in the presence of an alkali. This ring closure reaction is carried out, preferably at a temperature of 80 - 200 °C.

When an alkali metal salt such as potassium carbonate, sodium carbonate, potassium hydrogencarbonate or sodium hydrogencarbonate is used as the acid-binding agent used in the reaction of the compounds of the formulas (2) and (3), the compound represented by the formula (4) which is an intermediate need not be separated and the desired anthrapyridone compound represented by the formula (1) can be directly obtained.

The organic solvents used in the ring closure reaction include alcohols such as isobutanol in addition to those exemplified above. These may be used alone or in combination. Besides, they may be used together with water.

As the alkalis, there may be used alkali metal salts such as sodium hydroxide, potassium hydroxide and lithium hydroxide in addition to those exemplified above.

Furthermore, introduction of sulfonic group into the aromatic ring in the formula (1) can be easily performed by the known sulfonation method using fuming sulfuric acid.

Resins to which the compound of the present invention can be applied as a coloring agent include thermoplastic resins such as polystyrene, polymethyl methacrylate, polyvinyl chloride, acrylonitrile/butadiene/styrene copolymer (ABS resin), acrylonitrile/styrene copolymer (AS resin), polycarbonate, polyphenylene oxide, polypropylene, polyethylene, polyacrylonitrile, polyamide, polyacetal, polyethylene terephthalate, and polybutylene terephthalate and thermosetting resins such as phenolic resin, urea resin, melamine resin, unsaturated polyester resin, epoxy resin and diallyl phthalate resin.

Among them, preferred are acrylonitrile/butadiene/styrene copolymer (ABS resin), acrylonitrile/styrene copolymer (AS resin), polypropylene and polyethylene resin.

When the anthrapyridone compound of the present invention is used as a coloring agent, colored products can be obtained by known methods, for example, by mixing the resin and the coloring agent by a suitable method and then, injection molding, extrusion molding or spinning the mixture under heat and pressure. For instance, pellets or powders of resin are mixed with pulverized coloring agent in a suitable mixer, if desired, with various additives, and then the mixture is treated in a kneader, roll mill, Banbury mixer, extruder or the like until the coloring agent is dissolved or dispersed in the resin. If desired, the colored resin is subjected to molding such as compression, injection, extrusion or blow to obtain molded articles.

Alternatively, the coloring agent is added to a monomer containing a suitable polymerization catalyst, followed by polymerization to obtain a colored thermoplastic or thermosetting resin. The resulting colored resin can be molded by a suitable method.

Amount of the coloring agent to be added is not critical, but 0.01 - 5 % by weight, preferably 0.01 - 1 % by weight of the resin from economical point.

Furthermore, other dyes and pigments usually used for coloring resins can be additionally used. For example, opaque colored articles can be obtained by adding 0.1 - 1 % by weight of titanium dioxide.

According to the present invention, anthrapyridone compound can be obtained which is excellent in heat resistance when used as coloring agent for synthetic resins by industrially advantageous process without using the expensive 4-bromo-1,9-N-methyl-anthrapyridone.

The present invention is explained in more detail by the following nonlimiting Examples. In Examples, parts are by weight.

Example 1

A mixture of 1-bromo-4-methylaminoanthraquinone (16 parts) of the following formula:

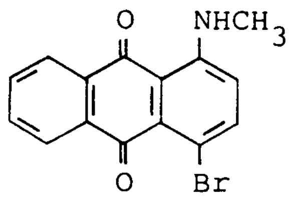

and m-chloroacetoanilide (12.7 parts) of the following formula:

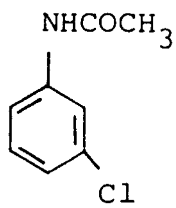

was heated at 135 - 145 °C for 25 hours in o-dichlorobenzene in the presence of metallic copper (powder, 0.3 part) and potassium carbonate (17.3 parts). After cooling, the resulting precipitate was filtrated, washed with methanol and then water and dried to obtain a cake (13.5 parts, yield 70 %) of anthrapyridone compound of the following formula:

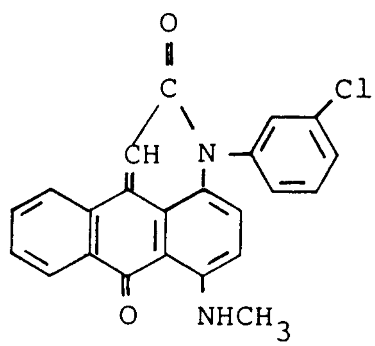

This compound showed a single red spot when thin-layer-chromatographed and λ max (in N,N-dimethylformamide) of 547 nm and had a melting point of 281 - 284 °C (uncorrected).

The anthrapyridone compound obtained (0.25 part) was blended with ABS resin (500 parts) and the resulting blend was subjected to coloring at 205 °C using an extruder to obtain colored pellets.

The pellets were molded at the cycle of 230 °C x 1 minute using an injection molding machine to obtain a plate-like molded article colored in red with fluorescence. Even when the injection molding was carried out at the cycle of 270 °C x 3 minutes, shade of the resulting plate-like molded product was substantially the same as that obtained above. This demonstrates a superior heat resistance of the compound.

Example 2

Example 1 was repeated except that an acetylamine compound of the following formula:

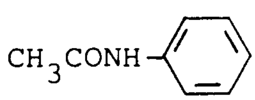

was used in place of the acetylanilide, whereby an anthrapyridone of the following formula:

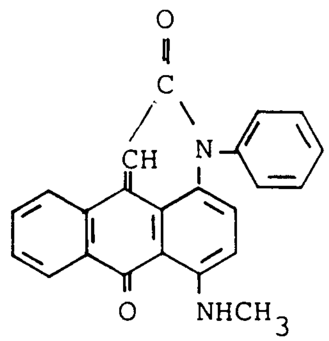

λ max = 547 nm; melting point = 312 - 315 °C uncorrected.

Examples 3 - 11

Molded articles were prepared in the same manner as in Example 1 using the anthrapyridone compounds shown in Table 1 as coloring agents. Shade of the articles obtained is shown in the right column of Table 1.

Table 1

| Example | 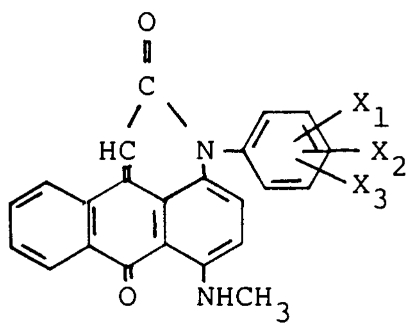 | | | |
|---|---|---|---|---|
| No. | $X_1$ | $X_2$ | $X_3$ | Shade |
| 3 | P-$SO_2N(CH_3)_2$ | H | H | Bluish red with fluorescence |
| 4 | P-Cl | H | H | Red with fluorescence |
| 5 | P-$OCH_3$ | H | H | " |
| 6 | P-$CH_3$ | H | H | " |
| 7 | P-$SO_2CH_3$ | H | H | " |
| 8 | m-$CONH_2$ | H | H | " |
| 9 | m-Cl | m-Cl | H | " |
| 10 | O-$CH_3$ | H | H | " |
| 11 | -$CH_3$ | $CH_3$ | -$CH_3$ | " |

Example 12

A mixture of potassium 1-amino-4-bromoanthraquinone-2-sulfonate (20 parts) of the following formula:

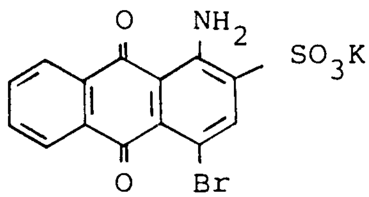

and m-chloroacetanilide (12.7 parts) of the following formula:

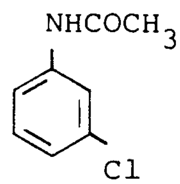

was heated at 115 - 120 °C for 20 hours in sulfolane in the presence of metallic copper (powder, 0.3 part) and potassium carbonate (17.3 parts). After cooling, the resulting precipitate was filtrated to obtain a compound of the following formula:

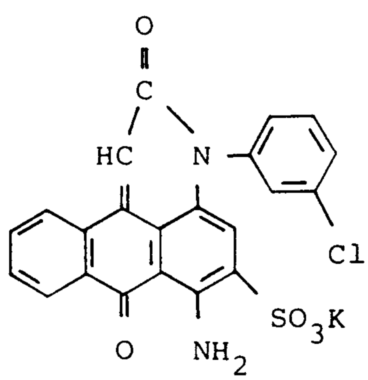

Wool was dyed with the above compound by conventional method. The wool was dyed in vivid orange color.

The resulting wet cake was dissolved in water (150 parts) and reduced with glucose at 60 - 70 °C. A cake obtained was purified with acetone to obtain anthrapyridone of the following formula:

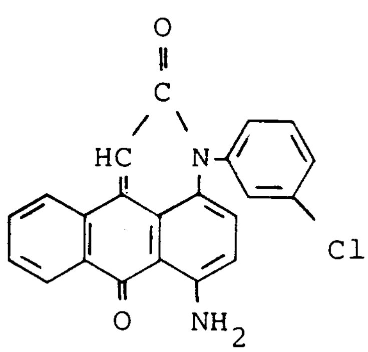

This compound showed a single orange spot when thin-layer-chromatographed and λ max (in N,N-dimethylformamide) of 524 nm.

The compound obtained was molded in the same manner as in Example 1 to obtain a plate-like molded article colored in orange having fluorescence.

This compound was superior in heat resistance as in Example 1.

Example 13

Example 12 was repeated except that 1-amino-4-bromoanthraquinone-2-carboxylic acid was used in place of potassium 1-amino-4-bromoanthraquinone-2-sulfonate, whereby a compound of the following formula which is useful as a raw material or an intermediate was obtained.

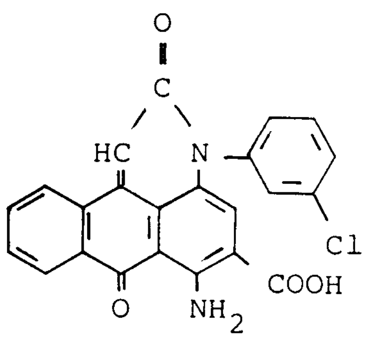

When carboxylic acid portion of this compound was esterified with a lower alcohol by conventional method, the resulting ester dyed polyester fibers in fast red color.

Example 14

A mixture of a compound (19.0 parts) of the following formula:

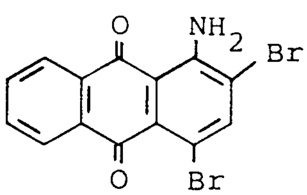

and p-chloroacetoanilide (12.7 parts) of the following formula:

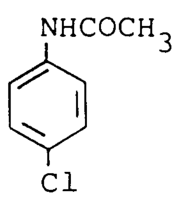

was heated at 140 - 145 °C for 25 hours in o-dichlorobenzene in the presence of metallic copper (powder, 0.3 part) and potassium carbonate (17.3 parts). After cooling, the resulting precipitate was filtrated, washed with methanol, then with water and dried to obtain an anthrapyridone compound of the following formula:

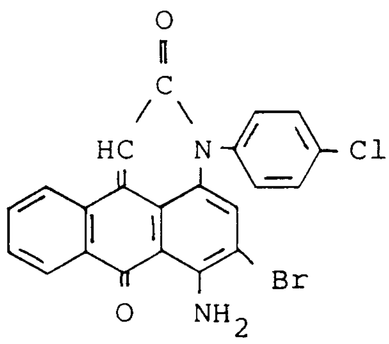

Example 15

Example 14 was repeated except that 1-amino-2,4-dichloroanthraquinone was used in place of 1-amino-2,4-dibromoanthraquinone, whereby the following compound was obtained which had the similar properties to those of the compound obtained in Example 14.

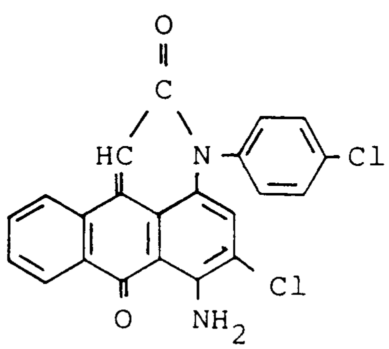

Example 16

Example 14 was repeated except that 1-amino-2-methyl-4-bromoanthraquinone was used in place of 1-amino-2,4-dibromoanthraquinone, whereby the following compound was obtained which had the similar properties to those of the compound obtained in Example 14.

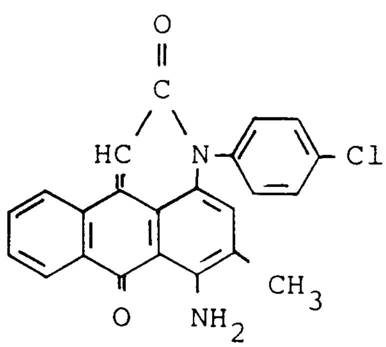

Example 17

Reaction was carried out in the same manner as in Example 1 except that an acetylamine of the following formula:

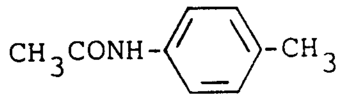

was used in place of the acetylamine compound used in Example 1, cuprous chloride was used in place of copper powder and sodium hydrogencarbonate was used in place of potassium carbonate. After cooling, the resulting precipitate was filtrated, washed with methanol and then water and dried to obtain an anthraquinone compound of the following formula:

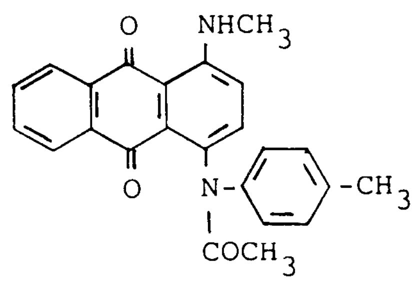

This compound was totally dispersed in 100 parts of 2.8 % aqueous potassium hydroxide solution and heated at 115 - 120 °C for 10 hours. After cooling, the resulting precipitate was filtrated, washed with water and dried to obtain a cake. This cake was purified with 70 % sulfuric acid to obtain an anthrapyridone compound of the following formula:

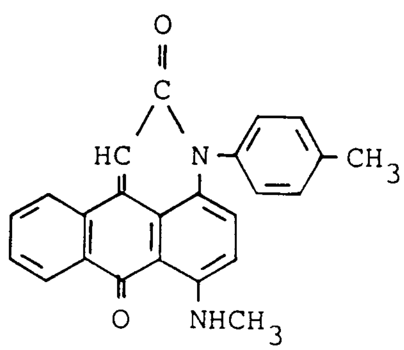

Example 18

The anthrapyridone compound (18.3 parts) obtained in Example 17 was added to 5 % fuming sulfuric acid (120 parts), followed by stirring at 20 - 25 °C. This was introduced into water (500 parts) and the resulting precipitate was filtrated and washed with water to obtain a compound of the following formula:

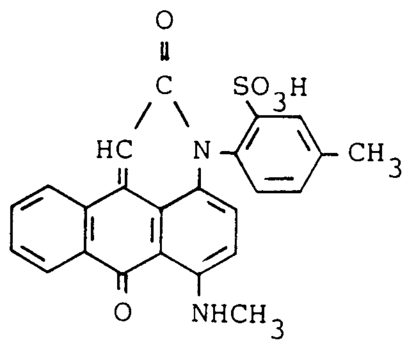

Wool was dyed with this cake by conventional method. The wool was dyed in clear yellowish red color.

Example 19

An anthrapyridone compound (20.8 parts, yield 87.2 %) of the following formula was obtained in the same manner as in Example 1 except that 1-bromo-4-benzoylaminoanthraquinone (20.7 parts) was used in place of 1-bromo-4-methylaminoanthraquinone and p-chloroacetanilide (13.1 parts) was used in place of m-chloroacetanilide.

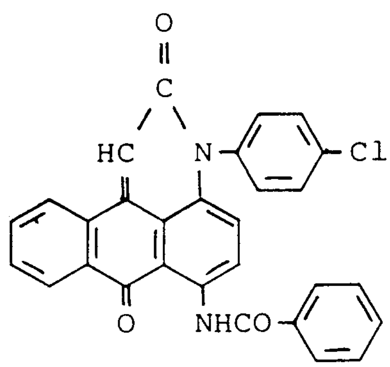

This compound showed a single yellow spot when thin-layer chromatographed and a λ max (in N,N-dimethylformamide) of 464 nm and had a melting point of 300 °C or higher.

Then, the anthrapyridone compound obtained (0.25 part) was blended with ABS resin (500 parts) and the blend was subjected to coloring at 205 °C using an extruder, whereby colored pellets were obtained.

The pellets obtained were molded at the cycle of 230 °C x 1 minute using an injection molding machine to obtain a transparent plate-like molded article of yellowish red color having fluorescence. Even when the injection molding was carried out at the cycle of 270 °C x 3 minutes, shade of the resulting plate-like molded article was substantially the same as that obtained above. This demonstrates a superior heat resistance of the compound.

Example 20

Example 19 was repeated except that in place of the acetanilide used therein was used an acetanilide compound of the following formula:

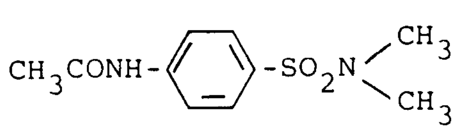

whereby an anthrapyridone compound of the following formula and having the similar properties to those of the compound obtained in Example 19 was obtained.

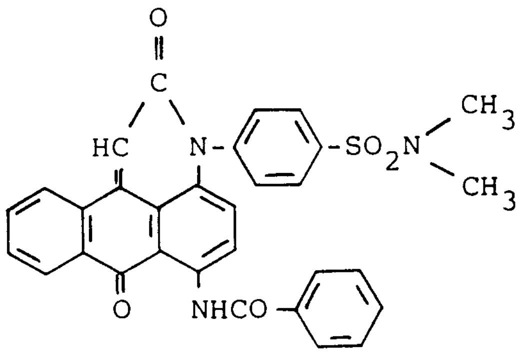

Examples 21 - 26

In the same manner as in Example 1, colored molded articles were prepared using the anthrapyridone compounds shown in Table 2 as coloring agents for resins. Shade of the resulting molded articles is shown in the right column of Table 2.

Table 2

| Example | 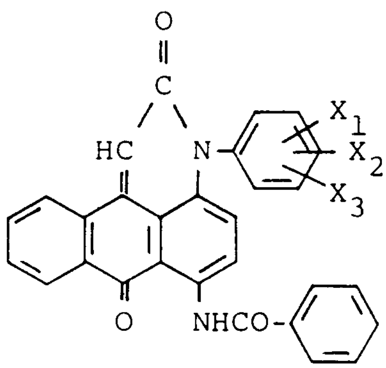 | | | |
|---|---|---|---|---|
| No. | $X_1$ | $X_2$ | $X_3$ | Shade |
| 21 | P-Cl | H | H | Yellow with fluoeerescence |
| 22 | P-$OCH_3$ | H | H | " |
| 23 | P-$CH_3$ | H | H | " |
| 24 | P-$NO_2$ | H | H | " |
| 25 | m-$CONH_2$ | H | H | " |
| 26 | -$CH_3$ | -$CH_3$ | -$CH_3$ | " |

Example 27

Anthrapyridone compound (10 parts) obtained in Example 20 and having the following formula:

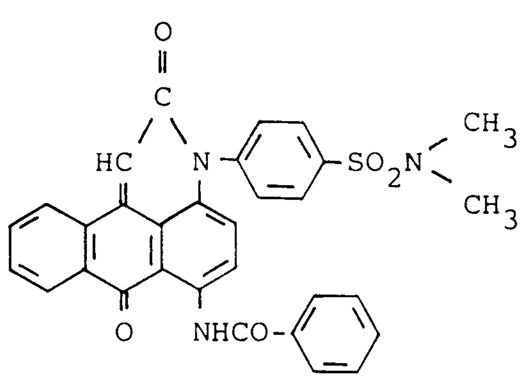

was subjected to treatment in 65 % sulfuric acid at 90 °C for 3 hours. The resulting precipitate was filtrated, washed with water and dried to obtain an anthrapyridone compound (6.1 parts) of the following formula:

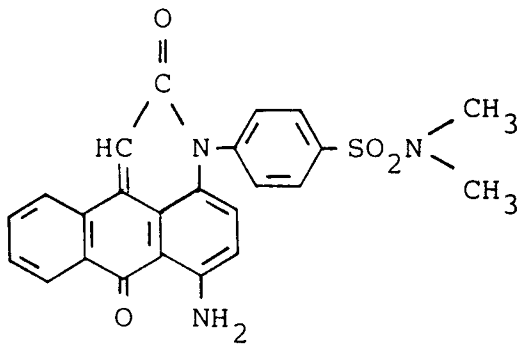

This compound showed a single orange spot when thin-layer chromatographed and had a λ max of 523 nm (in N,N-dimethylformamide). This was molded by the method used in Example 1 to obtain a plate-like molded article of orange color having fluorescence. This compound was superior in heat resistance as in Example 1.

Examples 28 - 31

In the same manner as in Example 1, colored resin molded articles were prepared using the anthrapyridone compounds shown in Table 3 as coloring atents. Shade of the obtained articles is shown in the right column of Table 3.

Table 3

| Example | 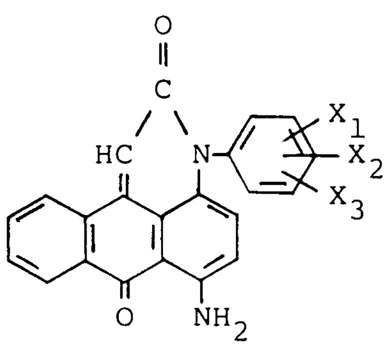 | | | |
|---|---|---|---|---|
| No. | $X_1$ | $X_2$ | $X_3$ | Shade |
| 28 | P-Cl | H | H | Orange with fluorescence |
| 29 | P-$OCH_3$ | H | H | " |
| 30 | P-$CH_3$ | H | H | " |
| 31 | -$CH_3$ | -$CH_3$ | -$CH_3$ | " |

## Claims

1. A process for producing an anthrapyridone compound represented by the formula (1):

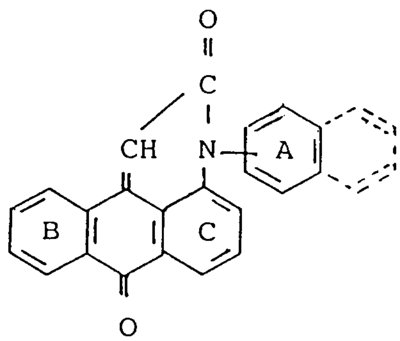

(1)

wherein A is a benzene ring or a naphthalene ring which may have a substituent and aromatic rings B and C may further have a substituent, which comprises allowing an $\alpha$-haloanthraquinone compound represented by the formula (2):

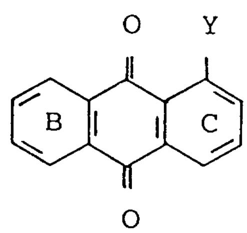

(2)

wherein Y is halogen and B and C are as defined above, to react with an amide compound represented by the formula (3):

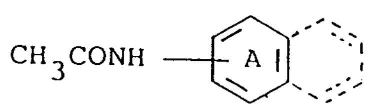

(3)

wherein A is as defined above, to obtain a compound represented by the formula (4):

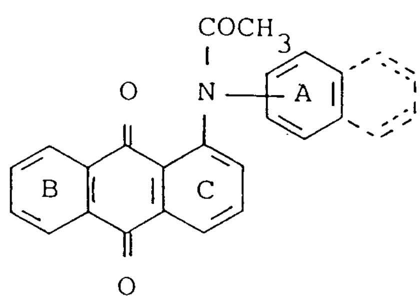

(4)

wherein A, B and C are as defined above, and then subjecting this compound to ring closure reaction.

2. A process according to claim 1, wherein the reaction of $\alpha$-haloanthraquinone (2) and amide compound (3) is carried out in the presence of metallic copper or a copper compound.

3. A process according to claim 1 or 2 , wherein the reaction of α-haloanthraquinone compound (2) and amide compound (3) is carried out in water or an organic solvent.

4. A process according to any preceding claim, wherein the reaction of α-haloanthraquinone compound and amide compound (3) is carried out at 100 - 200 °C.

5. A method for coloring a synthetic resin which comprises blending a synthetic resin with an anthrapyridone compound represented by the formula (1):

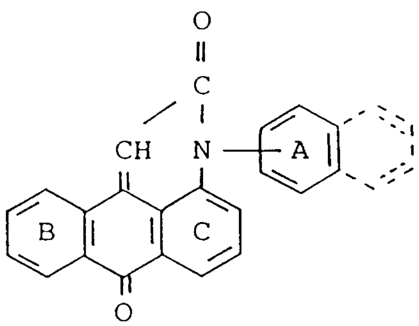

(1)

wherein A is a benzene ring or a naphthalene ring which may have a substituent and aromatic rings B and C may have a substituent, in an amount of 0.01 - 5 % by weight of the resin.

6. A method according to claim 5 , wherein the anthrapyridone compound is dissolved or dispersed in the synthetic resin to color the resin.

7. A method according to claim 5 or 6 wherein the anthrapyridone compound is represented by the formula (I):

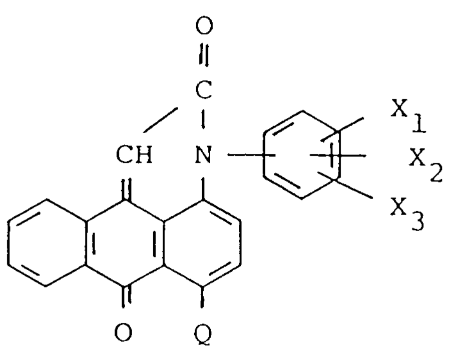

(I)

wherein Q is $-NH_2$, $-NHCH_3$ or -NHCOZ where Z is phenyl or alkyl which may be substituted; $X_1$, $X_2$ and $X_3$ are each hydrogen, halogen, alkyl, alkoxy, hydroxy, $-NHCOR^1$, $-CONR^2R^3$, $-COR^4$, $-COOR^5$, $-SO_2R^6$ or $-SO_2NR^7R^8$ where $R^1$ and $R^4$ are each $C_{1-4}$ alkyl, $R^2$ and $R^3$ are each hydrogen or $C_{1-4}$ alkyl, $R^5$ and $R^6$ are each alkyl or hydroxyalkyl and $R^7$ and $R^8$ are each hydrogen or $C_{1-4}$ alkyl, with proviso that when Q is $-NHCH_3$, $X_1$, $X_2$ and $X_3$ are each hydrogen, halogen, alkoxy, hydroxy, $-NHCOR^1$, $-CONR^2R^3$, $-COR^4$, $-COOR^5$, $-SO_2R^6$ or $-SO_2NR^7R^8$.

8. A method according to claim 5 or 6, wherein the anthrapyridone compound is represented by the formula (II):

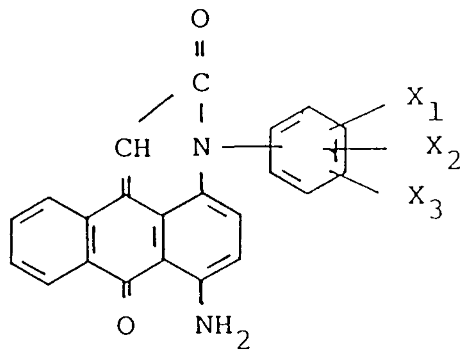

(II)

wherein $X_1$, $X_2$ and $X_3$ are as defined above.

**9.** A method according to claim 5 or 6, wherein the anthrapyridone compound is represented by the formula (III):

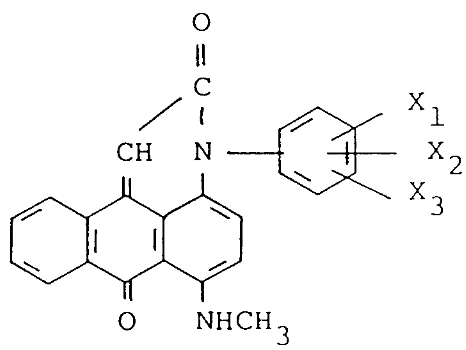

(III)

wherein $X_1$, $X_2$ and $X_3$ are as defined above.

**10.** A method according to claim 5 or 6, wherein the anthrapyridone compound is represented by the formula (IV):

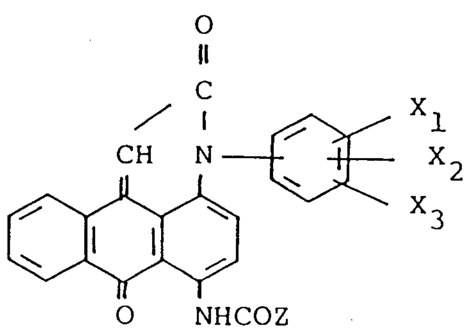

(IV)

wherein $X_1$, $X_2$, $X_3$ and Z are as defined above.

**11.** A method according to claim 5 or 6, wherein the anthrapyridone compound is represented by the formula (V):

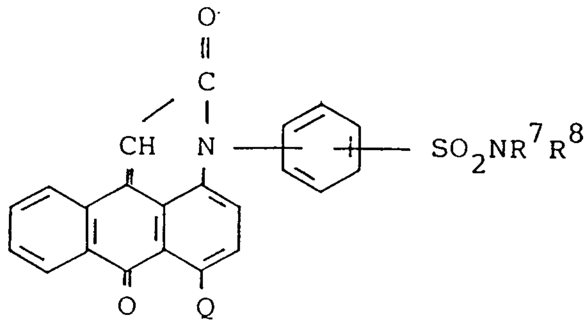

(V)

wherein Q, $R^7$ and $R^8$ are as defined above.

**12.** A method according to claim 5 or 6, wherein the anthrapyridone compound is represented by the formula (VI):

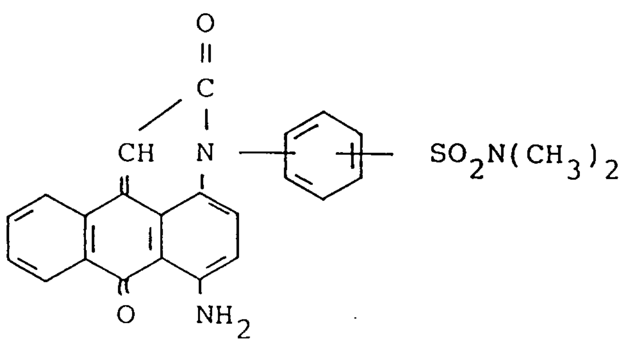

(VI)

**13.** A method according to any of claims 5-12, wherein the synthetic resin is at least one resin selected from the group consisting of polystyrene, polymethyl methacrylate, polyvinyl chloride, acrylonitrile/butadiene/styrene copolymer (ABS resin), acrylonitrile/styrene copolymer (AS resin), polycarbonate, polyphenylene oxide, polypropylene, polyethylene, polyacrylonitrile, polyamide, polyacetal, polyethylene terephthalate, polybutylene terephthalate, phenolic resin, urea resin, melamine resin, unsaturated polyester resin, epoxy resin and diallyl phthalate resin.

**14.** A method according to claim 13, wherein the synthetic resin is at least one resin selected from the group consisting of acrylonitrile/butadiene/styrene copolymer (ABS resin), acrylonitrile/styrene copolymer (AS resin), polypropylene and polyethylene resin.

**Patentansprüche**

**1.** Verfahren zur Herstellung einer Anthrapyridonverbindung der Formel (1):

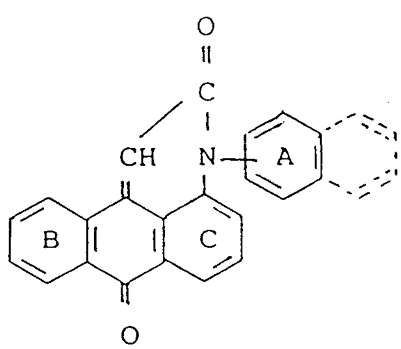

(1)

in der A einen Benzolring oder einen Naphthalinring bedeutet, der einen Substituenten aufweisen kann, und die aromatischen Ringe B und C darüberhinaus einen Substituenten aufweisen können, bei dem eine α-Halogenanthrachinonverbindung der Formel (2):

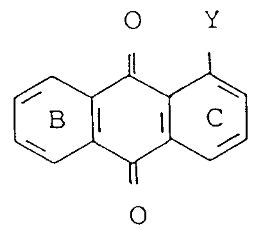

( 2 )

in der Y ein Halogenatom bedeutet und B und C wie vorstehend definiert sind, mit einer Amidverbindung der Formel (3):

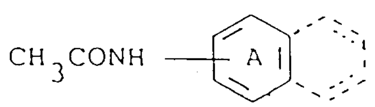

( 3 )

in der A wie vorstehend definiert ist, umgesetzt wird, wobei eine Verbindung der Formel (4) erhalten wird:

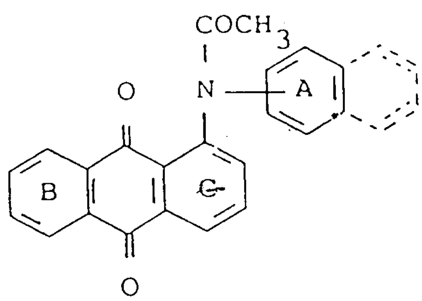

( 4 )

in der A, B und C wie vorstehend definiert sind, und bei dem diese Verbindung dann einer Ringschlußreaktion unterworfen wird.

**2.** Verfahren nach Anspruch 1, wobei die Umsetzung des α-Halogenanthrachinons (2) und der Amidverbindung (3) in Gegenwart von metallischem Kupfer oder einer Kupferverbindung durchgeführt wird.

**3.** Verfahren nach Anspruch 1 oder 2, wobei die Umsetzung der α-Halogenanthrachinonverbindung (2) und der Amidverbindung (3) in Wasser oder einem organischen Lösungsmittel durchgeführt wird.

**4.** Verfahren nach einem der vorstehenden Ansprüche, wobei die Umsetzung der α-Halogenanthrachinonverbindung und der Amidverbindung (3) bei 100 - 200 °C durchgeführt wird.

**5.** Verfahren zum Färben eines Kunstharzes, das das Mischen eines Kunstharzes mit einer Anthrapyridonverbindung der Formel (1):

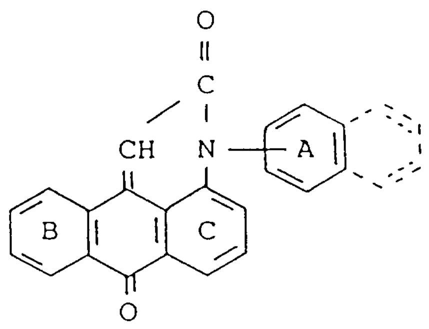

(1)

in der A einen Benzolring oder einen Naphthalinring bedeutet, der einen Substituenten aufweisen kann, und die aromatischen Ringe B und C einen Substituenten aufweisen können, in einer Menge von 0,01 - 5 Gew.-% des Harzes umfaßt.

6. Verfahren nach Anspruch 5, wobei die Anthrapyridonverbindung in dem Kunstharz gelöst oder dispergiert wird, um das Harz zu färben.

7. Verfahren nach Anspruch 5 oder 6, wobei die Anthrapyridonverbindung durch die Formel (I) wiedergegeben wird:

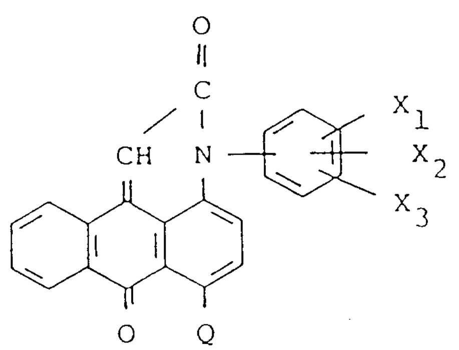

(I)

in der Q $-NH_2$, $-NHCH_3$ oder -NHCOZ bedeutet, wobei Z einen Phenyl- oder Alkylrest darstellt, der substituiert sein kann; $X_1$, $X_2$ und $X_3$ jeweils ein Wasserstoff- oder Halogenatom, einen Alkyl- oder Alkoxyrest, eine Hydroxygruppe, $-NHCOR^1$, $-CONR^2R^3$, $-COR^4$, $-COOR^5$, $-SO_2R^6$ oder $-SO_2NR^7R^8$ bedeuten, wobei $R^1$ und $R^4$ jeweils einen $C_{1-4}$-Alkylrest darstellen, $R^2$ und $R^3$ jeweils ein Wasserstoffatom oder einen $C_{1-4}$-Alkylrest bedeuten, $R^5$ und $R^6$ jeweils einen Alkyl- oder Hydroxyalkylrest darstellen und $R^7$ und $R^8$ jeweils ein Wasserstoffatom oder einen $C_{1-4}$-Alkylrest bedeuten, mit der Maßgabe, daß $X_1$, $X_2$ und $X_3$ jeweils ein Wasserstoff- oder Halogenatom, einen Alkoxyrest, eine Hydroxygruppe, $-NHCOR^1$, $-CONR^2R^3$, $-COR^4$, $-COOR^5$, $-SO_2R^6$ oder $-SO_2NR^7R^8$ bedeuten, wenn Q $-NHCH_3$ darstellt.

8. Verfahren nach Anspruch 5 oder 6, wobei die Anthrapyridonverbindung durch die Formel (II) wiedergegeben wird:

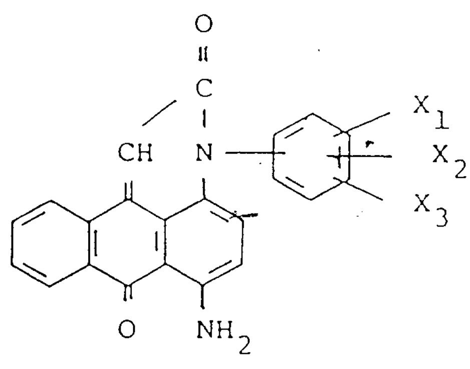

(II)

in der $X_1$, $X_2$ und $X_3$ wie vorstehend definiert sind.

**9.** Verfahren nach Anspruch 5 oder 6, wobei die Anthrapyridonverbindung durch die Formel (III) wiedergegeben wird:

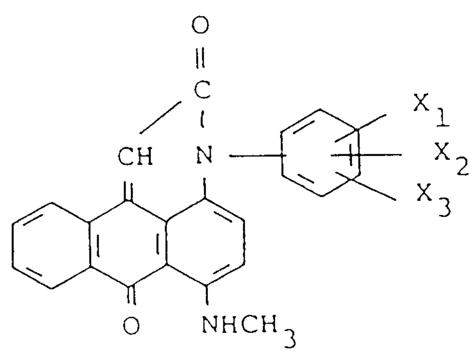

(III)

in der $X_1$, $X_2$ und $X_3$ wie vorstehend definiert sind.

**10.** Verfahren nach Anspruch 5 oder 6, wobei die Anthrapyridonverbindung durch die Formel (IV) wiedergegeben wird:

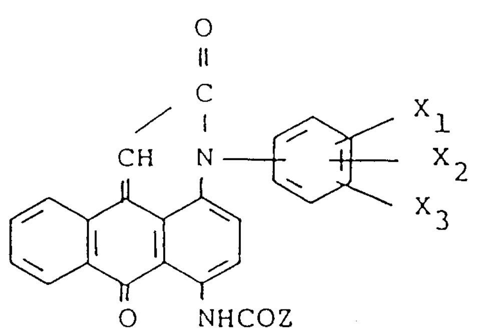

(IV)

in der $X_1$, $X_2$, $X_3$ und Z wie vorstehend definiert sind.

**11.** Verfahren nach Anspruch 5 oder 6, wobei die Anthrapyridonverbindung durch die Formel (V) wiedergegeben wird:

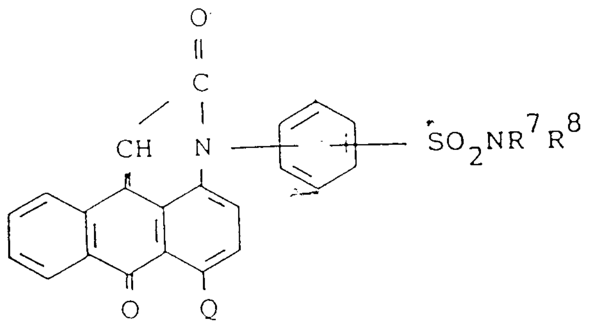

(V)

in der Q, $R^7$ und $R^8$ wie vorstehend definiert sind.

**12.** Verfahren nach Anspruch 5 oder 6, wobei die Anthrapyridonverbindung durch die Formel (VI) wiedergegeben wird:

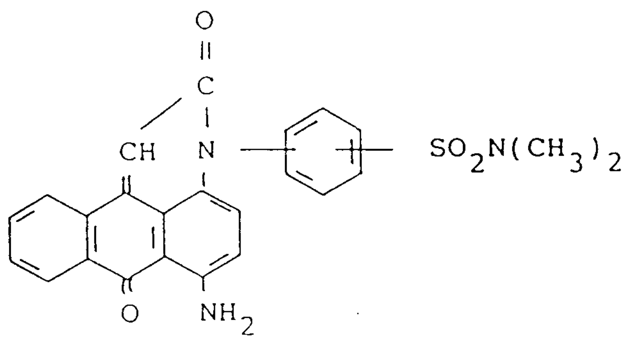

(VI)

**13.** Verfahren nach einem der Ansprüche 5 - 12, wobei das Kunstharz mindestens ein Harz ist, das aus der Gruppe Polystyrol, Polymethylmethacrylat, Polyvinylchlorid, Acrylnitril/Butadien/Styrol-Copolymerisat (ABS-Harz), Acrylnitril/Styrol-Copolymerisat (AS-Harz), Polycarbonat, Polyphenylenoxid, Polypropylen, Polyethylen, Polyacrylnitril, Polyamid, Polyacetal, Polyethylenterephthalat, Polybutylenterephthalat, Phenolharz, Harnstoffharz, Melaminharz, ungesättigtes Polyesterharz, Epoxyharz und Diallylphthalatharz ausgewählt ist.

**14.** Verfahren nach Anspruch 13, wobei das Kunstharz mindestens ein Harz ist, das aus der Gruppe Acrylnitril/Butadien/Styrol-Copolymerisat (ABS-Harz), Acrylnitril/Styrol-Copolymerisat (AS-Harz), Polypropylen- und Polyethylenharz ausgewählt ist.

**Revendications**

**1.** Procédé de préparation d'une anthrapyridone représentée par la formule (1) :

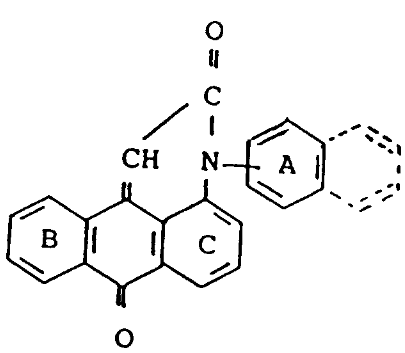

(1)

dans laquelle : A est un cycle benzénique ou un cycle naphthalénique qui peut avoir un substituant et les cycles aromatiques B et C peuvent avoir en outre un substituant, qui consiste à mettre une α-haloanthraquinone représentée par la formule (2) :

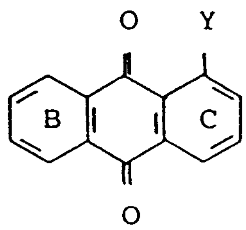

(2)

dans laquelle Y est halogène et B et C sont tels que définis ci-dessus à réagir sur un amide représenté par la formule (3):

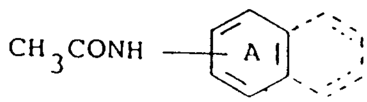

(3)

dans laquelle A est tel que défini ci-dessus pour obtenir un composé représenté par la formule (4) :

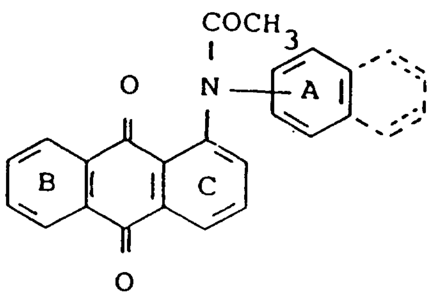

(4)

dans laquelle A, B et C sont tels que définis ci-dessus, puis à soumettre ce composé à une réaction de cyclisation.

**2.** Procédé suivant la revendication 1, qui consiste à effectuer la réaction d'une α-haloanthraquinone (2) et d'un amide (3) en la présence de cuivre métallique ou d'un composé de cuivre.

**3.** Procédé suivant la revendication 1 ou 2, qui consiste à effectuer la réaction d'une α-haloanthraquinone (2) et d'un amide (3) dans de l'eau ou dans un solvant organique.

**4.** Procédé suivant l'une quelconque des revendications précédentes, qui consiste à effectuer la réaction d'une α-haloanthraquinone et d'un amide (3) entre 100 et 200 °C.

**5.** Procédé pour teindre une résine synthétique, qui consiste à mélanger une résine synthétique à une anthrapyridone représentée par la formule (1) :

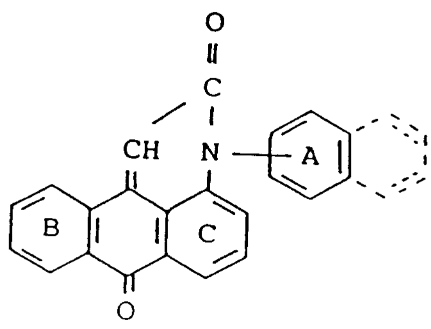

( 1 )

dans laquelle A est un cycle benzénique ou un cycle naphthalénique qui peut avoir un substituant et les cycles aromatiques B et C peuvent avoir un substituant en une quantité représentant de 0,01 à 5% du poids de la résine.

6. Procédé suivant la revendication 5, qui consiste à dissoudre l'anthrapyridone ou à la disperser dans la résine synthétique pour teindre la résine.

7. Procédé suivant la revendication 5 ou 6, dans lequel l'anthrapyridone est représentée par la formule (I) :

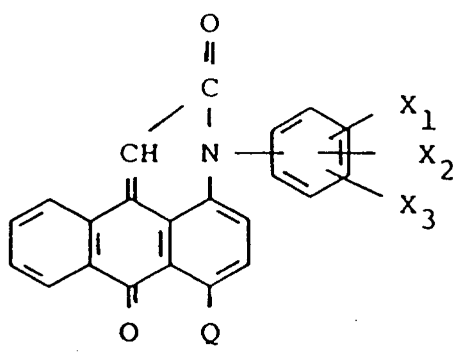

( I )

dans laquelle Q est $-NH_2$, $-NHCH_3$ ou -NHCOZ, Z étant phényle ou alcoyle qui peut être substitué ; $X_1$, $X_2$, et $X_3$ sont chacun de l'hydrogène, halogène, alcoyle, alcoxy, hydroxy, $-NHCOR^1$, $-CONR^2R^3$, $-COR^4$, $-COOR^5$, $-SO_2R^6$ ou $-SO_2NR^7R^8$, $R^1$ et $R^4$ étant chacun alcoyle ayant de 1 à 4 atomes de carbone, $R^2$ et $R^3$ étant chacun l'hydrogène ou alcoyle ayant de 1 à 4 atomes de carbone, $R^5$ et $R^6$ étant chacun alcoyle ou hydroxyalcoyle et $R^7$ et $R^8$ étant chacun de l'hydrogène ou alcoyle ayant de 1 à 4 atomes de carbone, sous réserve que lorsque Q est $-NHCH_3$, $X_1$, $X_2$ et $X_3$ sont chacun de l'hydrogène, halogène, alcoxy, hydroxy, $-NHCOR^1$, $-CONR^2R^3$, $-$ $COR^4$, $-COOR^5$, $-SO_2R^6$ ou $-SO_2NR^7R^8$.

8. Procédé suivant la revendication 5 ou 6, dans lequel l'anthrapyridone est représentée par la formule (II) :

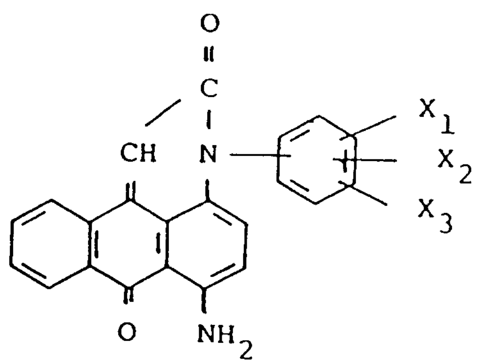

(II)

dans laquelle $X_1$, $X_2$ et $X_3$ sont tels que définis ci-dessus.

**9.** Procédé suivant la revendication 5 ou 6, dans laquelle l'anthrapyridone est représentée par la formule (III) :

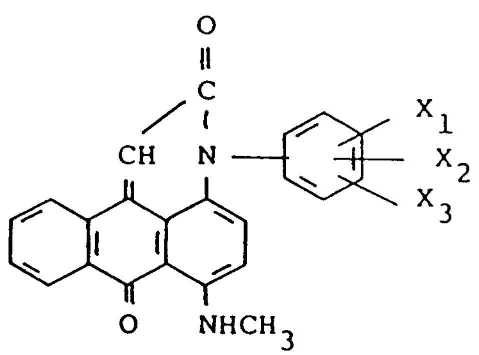

(III)

dans laquelle $X_1$, $X_2$ et $X_3$ sont tels que définis ci-dessus.

**10.** Procédé suivant la revendication 5 ou 6, dans lequel l'anthrapyridone est représentée par la formule (IV) :

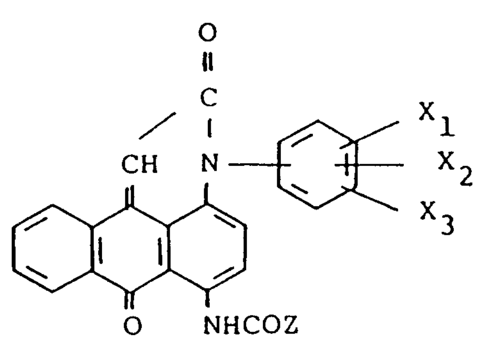

(IV)

dans laquelle $X_1$, $X_2$ et $X_3$ et Z sont tels que définis ci-dessus.

**11.** Procédé suivant la revendication 5 ou 6, dans lequel l'anthrapyridone est représentée par la formule (V) :

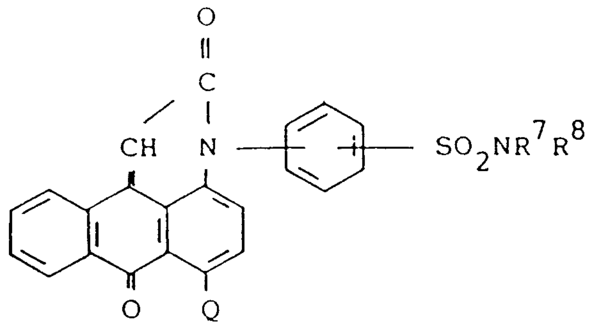

(V)

dans laquelle Q, $R^7$ et $R^8$ sont tels que définis ci-dessus.

**12.** Procédé suivant la revendication 5 ou 6, dans lequel l'anthrapyridone est représentée par la formule (VI) :

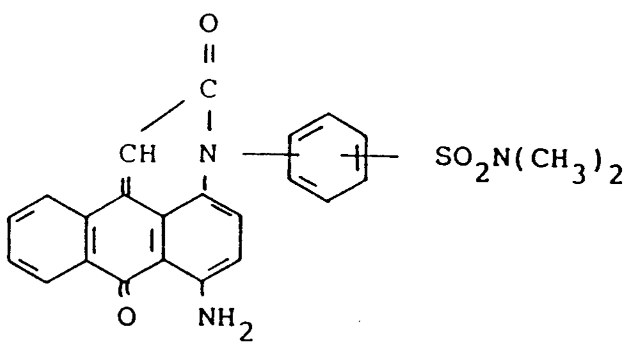

(VI)

**13.** Procédé suivant l'une quelconque des revendications 5 à 12, dans lequel la résine synthétique est au moins une résine choisie parmi le groupe consistant en le polystyrène, le poly(méthacrylate de méthyle), le poly(chlorure de vinyle), un copolymère d'acrylonitrile et de butadiène (résine ABS), un copolymère d'acrylonitrile et de styrène (résine AS), un polycarbonate, un poly(oxyde de phénylène), un polypropylène, un polyéthylène, un polyéthylène, un polyacrylonitrile, un polyamide, un polyacétal, un poly(téréphtalate d'éthylène), un poly(téréphtalate de butylène), une résine phénolique, une résine d'urée, une résine mélamine, une résine de polyester insaturé, une résine époxy et une résine de phtalate de diallyle.

**14.** Procédé suivant la revendication 13, par lequel la résine synthétique est au moins une résine choisie dans le groupe consistant en copolymère d'acrylonitrile, de butadiène et de styrène (résine ABS), en un copolymère d'acrylonitrile et de styrène (résine AS), en une résine de polypropylène et en une résine de polyéthylène.